# EUROPEAN PATENT SPECIFICATION

(11) **EP 3 970 493 B1**
(45) Date of publication and mention of the grant of the patent: **25.10.2023**
(21) Application number: 19935214.7
(22) Date of filing: 24.06.2019
(51) Int. Cl.: A01N 43/40, C05G 1/00, A01N 59/02, A01N 65/20, A01P 15/00, C05D 9/02, C05G 3/40

(54) **FERTILISER COMPOSITION INCLUDING ELEMENTAL SULFUR AND TRIGONELLINE AS AN ENHANCER OF MICROBIOLOGICAL OXIDATION OF ELEMENTAL SULPHUR**
DÜNGEMITTELZUSAMMENSETZUNG MIT ELEMENTAREM SCHWEFEL UND TRIGONELLIN ALS VERSTÄRKER FÜR MIKROBIOLOGISCHE OXIDATION VON ELEMENTAREM SCWEFEL
COMPOSITION FERTILISANTE QUI CONTIENT DU SOUFRE ÉLÉMENTAIRE ET DE LA TRIGONELLINE COMME POTENTIOMÈTRE DE L'OXYDATION MICROBIOLOGIQUE DU SOUFRE ÉLÉMENTAIRE

(43) Date of publication of application: 23.03.2022
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); SALAET MADORRAN, Ignasi, 44195 Teruel (ES); FERRER GINES, Maria, 44195 Teruel (ES); YANCE CHAVEZ, Tula Del Carmen, 44195 Teruel (ES); FUERTES DOÑATE, Carlos, 44195 Teruel (ES); CABALLERO MOLADA, Marcos, 44195 Teruel (ES)
(74) Representative: González López-Menchero, Álvaro Luis
(86) International application number: PCT/ES2019/070441
(87) International publication number: WO 2020/260728

(56) References cited:
- WO-A1-84/02059
- WO-A1-84/02059
- WO-A2-2008/024007
- WO-A2-2008/024007
- US-A1- 2016 229 761

## Description

The present invention relates to a fertiliser composition including an enhancer of the microbiological oxidation of elemental sulphur (S°), as well as to the use of said fertiliser composition.

More specifically, in a first aspect, the invention provides a fertiliser composition that includes trigonelline as an enhancer of the microbiological oxidation of elemental sulphur (S°), wherein trigonelline increases the rate of SO₄²⁻ generation in the presence of S⁰, the application thereof constituting a source of sulphur for the microbiological release of sulphuric acid in agricultural soils and an alternative to conventional sulphur fertilisers and amendments.

In a second aspect, the invention relates to a combination of the described fertiliser composition together with an additional fertiliser and/or biostimulant.

Sulphur (S) is an essential element for plants as it forms part of the cysteine and methionine amino acids, determining the structural conformation of proteins and the binding thereof to metal ligands (Ceccotti SP. 1996. Plant nutrient sulphur - A review of nutrient balance, environmental impact and fertilizers. Fertilizer Research 43(1): 117-125). In addition, sulphur forms part of numerous vitamins, such as biotin and thiamine, and of essential cofactors, such as in coenzyme A.

The most common inorganic form in which sulphur is found in well-drained soils is as sulphate (SO₄²⁻), and this is the form in which it is preferentially taken up by plants, although it can also be assimilated in the form of thiosulphate (S₂O₃²⁻). However, inorganic forms of sulphur usually constitute less than 5% of the total sulphur present in agricultural soils, while the majority (> 95% of total sulphur) is bound to organic molecules in organic matter of the soil or microbial biomass, and is therefore generally not directly available for assimilation by the plant.

Furthermore, an increasing sulphur deficiency in agricultural soils has been observed over the last 50 years due to several factors, mainly including: reduced sulphur emissions from industrial sources, the use of sulphur-free mineral fertilisers, decreased use of organic fertilisers and high sulphur extraction from soils by high-yielding plant varieties in relation to intensive agricultural practices (Etienne et al., 2018. Assessment of Sulfur Deficiency under Field Conditions by Single Measurements of Sulfur, Chloride and Phosphorus in Mature Leaves. Plants (Basel). 7(2)).

Likewise, the SO₄²⁻ ion, although it has a higher adsorption affinity to soil colloids than NO₃⁻ or Cl⁻ ions, is subject to leaching losses, which contributes to aquifer contamination. In tropical soils, sulphur deficiency often occurs naturally due to high mineralisation rates of organic forms (Ribeiro et al., 2001. Dynamics of Sulfur Fractions in Brazilian Soils Submitted to Consecutive Harvests of Sorghum. Published in Soil Sci. Soc. Am. J. 65:787-794).

The application of elemental sulphur (S°) as a fertiliser is an economical alternative for sulphur replenishment in agricultural soils and allows the use of concentrated commercial formulations of other nutrients, such as nitrogen or potassium. The oxidation of elemental sulphur (S°) to sulphate (SO₄²⁻) is gradual, thus reducing SO₄²⁻ losses by leaching, and depends on microbial activity and diversity of the soil, as well as environmental conditions (soil pH, temperature or humidity) (Tourna et al., 2014. Links between sulphur oxidation and sulphur-oxidising bacteria abundance and diversity in soil microcosms based on soxB functional gene analysis. FEMS Microbiol Ecol. 88:538-49). The transformation of S° to SO₄²⁻ is also influenced by the particle size of the S⁰, with oxidation being faster the smaller the particle size.

Furthermore, it is known that enzymatic oxidation of S⁰ to SO₄²⁻ by certain bacteria and archaea under aerobic conditions produces sulphuric acid (Wainwright, 1978. Microbial sulphur oxidation in soil. Sci. Prog. (Oxford). 65: 459-475; Fike et al., 2016. Geomicrobiology of Sulfur, in Ehrlich's Geomicrobiology, 6th Edn. Eds H.L. Ehrlich, D.K. Newman, and A. Kappler (Boca Raton, FL: Taylor & Francis), 479-515):

S⁰ + 1.5O₂ + H₂O → H₂SO₄

The microbiological release of sulphuric acid contributes to the solubilisation of certain plant nutrients that are in insoluble forms. An example is the phosphorus present in phosphate rock, the availability of which to plants can be greatly increased by being solubilised by micro-organisms of the soil when applied together with elemental sulphur (Lipman et al., 1916. Sulfur oxidation in soils and its effect on the availability of mineral phosphates. Soil Science: 2: 499-538; Evans et al., 2006. Application of reactive phosphate rock and sulphur fertilisers to enhance the availability of soil phosphate in organic farming. Nutrient Cycling in Agroecosystems 75:233-246).

Within the bacterial domain, the main genera involved in elemental sulphur oxidation in agricultural soils are *Acidithiobacillus*, *Acidianus*, *Alicyclobacillus, Aquaspirillum, Bacillus, Beggiatoa, Mesorhizobium, Methylobacterium, Parococcus, Pseudomonas, Rhizobium, Starkeya, Thermithiobacillus, Thermothrix, Thiobacillus, Xanthobacter.* However, in the application of elemental sulphur (S°) it must be considered that it must be transformed to sulphate ion (SO₄²⁻) in a short enough period of time to cover the agronomic needs in one crop cycle.

In this regard, some solutions have been proposed to increase the rate of sulphur oxidation. For example, patent application WO 2016/126278 describes an enhanced sulphate release fertiliser composition consisting of a mixture of elemental sulphur and humic acids.

Although the oxidation of elemental sulphur to sulphate ion is accelerated in this document, the rate of this oxidation reaches its maximum after 6 weeks, until the maximum amount of sulphur is released under controlled conditions of temperature and humidity, not being high enough for adequate agronomic efficiency in view of the fact that, under real environmental conditions (with wide fluctuations in temperature and humidity between day and night or depending on climatic phenomena) and in certain soils, such as calcareous soils, the release of sulphur can slow down considerably.

Cifuentes and Lindeman (in "Organic matter stimulation of elemental sulfur oxidation in a calcareous soil", Soil Sci. Soc. Am. J. 57: 727-731, 1993) show that the incorporation of different sources of organic matter (glucose, starch, cellulose or straw) into a soil promotes the oxidation of elemental sulfur. This increased oxidation of S⁰ in the presence of organic molecules seems to be due to an increased activity of chemoheterotrophic and mixotrophic bacteria capable of oxidising S⁰ (Bharathi, 2008. Sulfur cycle. Encyclopedia of ecology. Academic press. 3424-3431).

In fact, it is known that certain organic molecules, present for example in crop root exudates, have the ability to specifically modulate the growth or activity of bacteria that regulate nutrient cycles in agricultural soils, including sulphur, and have beneficial effects on crop nutrition (Meena et al., 2016, Potassium Solubilizing Microorganisms for Sustainable Agriculture, Free Review, Ed. Springer India; Zhalnina et al 2018, Dynamic root exudate chemistry and microbial substrate preferences drive patterns in rhizosphere microbial community assembly, Nat Microbiol, 3(4):470-480; Lamers et al., 2012, Microbial Transformations of Nitrogen, Sulfur, and Iron Dictate Vegetation Composition in Wetlands: A Review. Front Microbiol. 3: 156; Grayston and Germida, 1990, Influence of crop rhizospheres on populations and activity of heterotrophic sulfur-oxidizing microorganisms. Soil Biol. Biochem. 22: 457-463).

For the above reasons, in the field of plant nutrition there is currently a need to look for alternatives to conventional sulphur fertilisers that make it possible to provide sulphur in an economical, efficient and sustainable way and to promote the microbiological production of sulphuric acid to increase the solubilisation of plant nutrients in agricultural soils.

Considering the above, the present invention is based on the above-mentioned approaches in such a way that, by regulating the sulphur transformation processes in soils, certain organic molecules can, in the presence of elemental sulphur, increase the availability of this nutrient for plants and favour the microbiological release of sulphuric acid in agricultural soils. This approach would also constitute an alternative to conventional sulphur fertilisers and amendments.

Thus, in a first aspect, the present invention provides a fertiliser composition that includes trigonelline as an enhancer of the microbiological oxidation of elemental sulphur to sulphate ion (S⁰ to SO₄²⁻) wherein trigonelline increases the levels of SO₄²⁻ in agricultural soils.

Trigonelline, or N-methylnicotinic acid, is an alkaloid found in many plants, such as pea, hemp, oats, potato and fenugreek, in which it has various regulatory functions (Garg, 2016, in Nutraceuticals Efficacy, Safety and Toxicity, pp. 599-617). Trigonelline is the methylation product of niacin (vitamin B3).

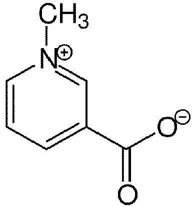

### Trigonelline molecule (C₇H₇NO₂)

As mentioned above, in a first aspect, the present invention provides a fertiliser composition that includes elemental sulphur (S°) and trigonelline as an enhancer of the microbiological oxidation of S⁰.

In view of the examples described hereafter, the generation of SO₄²⁻ in trigonelline-treated soil depends on the presence of S⁰ and is mediated by soil micro-organisms. Without being bound by any particular theory, the present inventors believe that, in the presence of S⁰, trigonelline stimulates the sulphur-oxidising bacteria present in the soil resulting in increased oxidation of S⁰. As previously discussed, the addition of various organic matter stimulates S⁰ oxidation; however, the nature of the organic matter has an important influence on this process. The stimulation of S⁰ oxidation by the application of trigonelline is greater than that of other organic matter, such as humic acids or glucose, which have a proven effect on S⁰ oxidation. Moreover, as demonstrated in the different examples, trigonelline has a stronger effect on S⁰ oxidation than other organic molecules chosen among organic acids, amino acids, alkaloids, sugars and alcohols, which are organic metabolites with the potential to have an inducing effect on soil microorganisms. More specifically, the effect of trigonelline is probably mediated by heterotrophic and mixotrophic micro-organisms capable of oxidising S⁰, since it is known that the addition of organic matter stimulates chemoheterotrophic micro-organisms and not chemoautotrophic micro-organisms.

In one embodiment, the fertiliser composition of the invention is in powder form and comprises between 85 and 99.5% by weight of S⁰ and between 0.5 and 15% of trigonelline.

In another embodiment, the fertiliser composition of the invention comprises between 85 and 99.5% by weight of S⁰, between 0.5 and 10% by weight of trigonelline and between 0.5 and 5% by weight of other components selected from the group consisting of sugars, amino acids, organic acids, polyamines, alcohols, nucleotides and combinations thereof, the fertiliser composition being in the form of a watersoluble powder.

In this embodiment, the presence of the other components included in the fertiliser composition of the invention is due to the fact that the presence of organic molecules favours the oxidation of inorganic sulphur (Cifuentes and Lindemann, 1993; Bharathi, 2008). Therefore, the presence of these components other than trigonelline and elemental sulphur in the composition of the invention is based on the fact that such components are organic molecules that can act as a source of energy or activate the metabolism of certain microorganisms.

When present in the present fertiliser composition, sugars are preferably selected from mono- and di-saccharides such as sucrose, fructose, trehalose, glucose, arabinose, maltose, lactose, as well as mixtures thereof.

When present in the present fertiliser composition, amino acids are preferably selected from threonine, lysine, phenylalanine, methionine, GABA, ornithine, glycine, aspartic acid, glutamine, glutamic acid, serine, asparagine, tyrosine, tryptophan, valine, leucine, isoleucine, proline, 4-hydroxyproline, arginine, histidine, alanine, cysteine, and mixtures thereof.

When present in the present fertiliser composition, the organic acids are preferably selected from lactic acid, succinic acid, oxalic acid, gluconic acid, threonic acid, citric acid, fumaric acid and mixtures thereof.

Polyamines, if present in the present composition, are preferably selected from putrescine, spermidine, spermine and mixtures thereof.

When present in the fertiliser composition, alcohols are preferably selected from glycerol, sorbitol, mannitol, myoinositol, as well as mixtures thereof.

The fertiliser composition of the invention is formulated in powder form, as indicated above, but can also be formulated as an emulsion composition with the addition of water or in granulated form by means of the addition of granulating agents known to the person skilled in the art.

According to the second aspect, the invention relates to a fertiliser composition such as the one described above in combination with an additional fertiliser selected from nitrogen fertilisers, phosphate fertilisers, potassium fertilisers, calcium fertilisers and amendments, micronutrients, boric acid, leonardite and feldspar, as well as combinations thereof, and/or in combination with one or more biostimulants selected from the group consisting of amino acid hydrolysates, humic extracts, seaweed extracts, live micro-organisms, extracts of micro-organisms and combinations thereof. The live micro-organisms or extracts of micro-organisms shall preferably be of the species *Pichia guilliermondii*, *Azotobacter chroococcum*, *Bacillus megaterium*, or other bacteria belonging to genera recognised for their elemental sulphur oxidising capacity, preferably *Acidithiobacillus, Acidianus, Alicyclobacillus, Aquaspirillum, Bacillus, Beggiatoa, Mesorhizobium, Methylobacterium, Parococcus, Pseudomonas, Rhizobium, Starkeya, Thermithiobacillus, Thermothrix, Thiobacillus, Xanthobacter.*

In this case, the composition of the invention is present in the combination in a proportion of 10 to 60% by weight.

In one embodiment, the additional nitrogen fertiliser is present in the blend in a proportion of 5 to 90 % by weight and is selected from urea, potassium nitrate, ammonium nitrate, calcium nitrate, calcium ammonium nitrate, nitromagnesium.

In another embodiment, the additional phosphate fertiliser is present in the combination in a proportion of 5 to 90 % by weight and is selected from phosphate rock, triple superphosphate, single superphosphate, concentrated superphosphate, phosphoric acid.

In yet another embodiment, the additional potassium fertiliser is present in the blend in a proportion of 5 to 90% by weight and is selected from potassium chloride and potassium hydroxide.

In another embodiment, the additional calcium fertiliser is present in the blend in a proportion of 5 to 90% by weight and is selected from calcium chloride, calcium cyanamide, dolomite, limestone, calcium oxide, calcium hydroxide.

In yet another embodiment, the additional micronutrient fertiliser is present in the combination in a proportion of 1 to 30% by weight and is selected from ammonium molybdate, cobalt chloride and micronutrients (iron, magnesium, zinc, manganese, copper) combined with complexing agents (humates, citrate, gluconates, heptagluconates and amino acids) or with chelating agents (ethylenediaminetetraacetic acid EDTA, ethylenediamine-di(o-hydroxyphenyl acetic acid) EDDHA, diethylenetriaminepentaacetic acid DPTA).

In a further embodiment, boric acid as an additional fertiliser is present in the combination in a proportion of 1 to 30% by weight.

In another embodiment, leonardite as an additional fertiliser is present in the combination in a proportion of 5 to 90% by weight.

In a further embodiment, feldspar as an additional fertiliser is present in the combination in a proportion of 5 to 90% by weight.

In the case of the combination of the fertiliser composition of the invention with biostimulants as described above, preferably the biostimulants are present in the combination in a proportion of 5 to 90% by weight.

It is also an object of the invention to use the fertiliser compositions described herein in powder form, in granulated form or in emulsion form.

In case of use of the composition of the invention in powder or emulsion form, it is preferably applied in an amount of 0.5 to 20 kg/ha and 0.06 to 1 kg/ha respectively.

In case of use of the composition of the invention in combination with another additional fertiliser in granular form, preferably said combination is applied directly in an amount of 75 to 1,500 kg/ha.

### Examples

### 1. Screening for organic molecules that stimulate elemental sulphur oxidation in an agricultural soil.

In order to identify compounds that promote the oxidation of S° to SO₄²⁻ in agricultural soils more efficiently than those described to date, the effect on S⁰ oxidation of different organic molecules belonging to the groups of organic acids, amino acids, alkaloids, sugars and alcohols was studied. For this purpose, different products consisting of 97.5% of S⁰ and 2.5% of the organic molecule to be tested are generated. Humic acids are used as a positive control, as it has been described that they increase the rate of sulphur oxidation. The different mixtures are incorporated into a soil at a rate of 3 g/kg soil. An agricultural soil with a sandy-loamy texture is used. The soil moisture is kept constant at 40% and the temperature at 20°C. Every 10 days a sample is collected and the amount of SO₄²⁻ present in the soil is analysed.

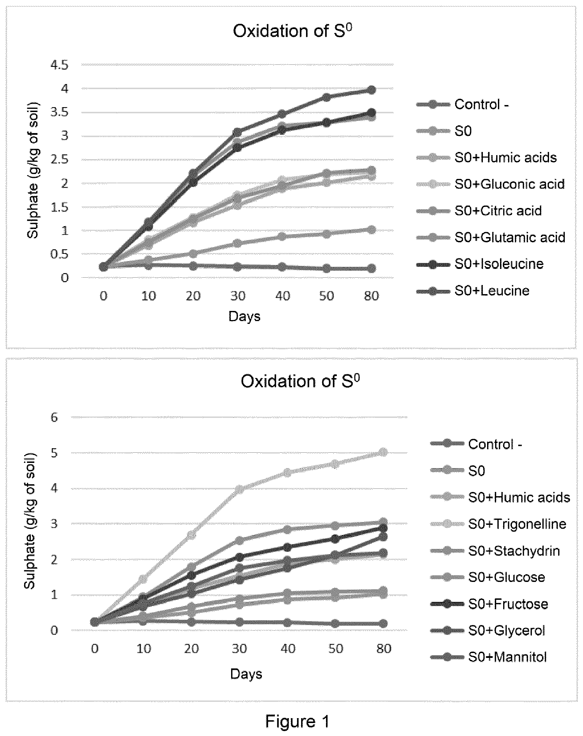

The results of this test are shown in Table 1 below and in Figure 1.

**Table 1**

| Days | 0 | 10 | 20 | 30 | 40 | 50 | 80 |
|---|---|---|---|---|---|---|---|
| Control - | 0.24 | 0.27 | 0.25 | 0.24 | 0.23 | 0.2 | 0.2 |
| S⁰ | 0.24 | 0.37 | 0.51 | 0.73 | 0.87 | 0.93 | 1.02 |
| S⁰+humic acids | 0.24 | 0.69 | 1.17 | 1.54 | 1.88 | 2.01 | 2.15 |
| S⁰+gluconic acid | 0.24 | 0.81 | 1.28 | 1.75 | 2.07 | 2.18 | 2.23 |
| S⁰+citric acid | 0.24 | 0.75 | 1.25 | 1.68 | 1.95 | 2.21 | 2.28 |
| S⁰+glutamic acid | 0.24 | 1.15 | 2.15 | 2.87 | 3.21 | 3.27 | 3.39 |
| S⁰+isoleucine | 0.24 | 1.09 | 2.01 | 2.75 | 3.12 | 3.28 | 3.49 |
| S⁰+leucine | 0.24 | 1.18 | 2.2 | 3.08 | 3.46 | 3.82 | 3.97 |
| S⁰+trigonellin e | 0.24 | 1.45 | 2.69 | 3.97 | 4.45 | 4.68 | 5.02 |
| S°+stachydrin | 0.24 | 0.41 | 0.68 | 0.89 | 1.05 | 1.09 | 1.12 |
| S⁰+glucose | 0.24 | 0.95 | 1.79 | 2.54 | 2.84 | 2.95 | 3.05 |
| S⁰+fructose | 0.24 | 0.89 | 1.56 | 2.07 | 2.35 | 2.58 | 2.88 |
| S⁰+glycerol | 0.24 | 0.68 | 1.03 | 1.43 | 1.76 | 2.13 | 2.65 |
| S⁰+mannitol | 0.24 | 0.76 | 1.25 | 1.76 | 1.97 | 2.12 | 2.19 |

The results indicate that trigonelline is the molecule that increases S⁰ oxidation the most, multiplying the SO₄²⁻ generated after 80 days by 2.3 with respect to humic acids.

Amino acids (leucine, isoleucine and glutamic acid), as well as glucose, fructose and glycerol also improve S⁰ oxidation compared to humic acids. Gluconic acid, citric acid and mannitol show similar results to humic acids.

### 2. Verification of the effect of trigonelline on S⁰ oxidation and the mediation of soil micro-organisms

In order to prove that the effect of trigonelline depends on the presence of S⁰ and that the oxidation of this elemental sulphur is mediated by microorganisms, on the one hand the generation of SO₄²⁻ was studied in a soil treated with trigonelline and without S⁰, and on the other hand, the generation of SO₄²⁻ in sterilised soils (free of microorganisms, Sueloest) to which S⁰ and S⁰ with trigonelline were applied. The soils were sterilised by fumigation with chloroform. The different mixtures were incorporated into a soil at a rate of 3 g/kg soil.

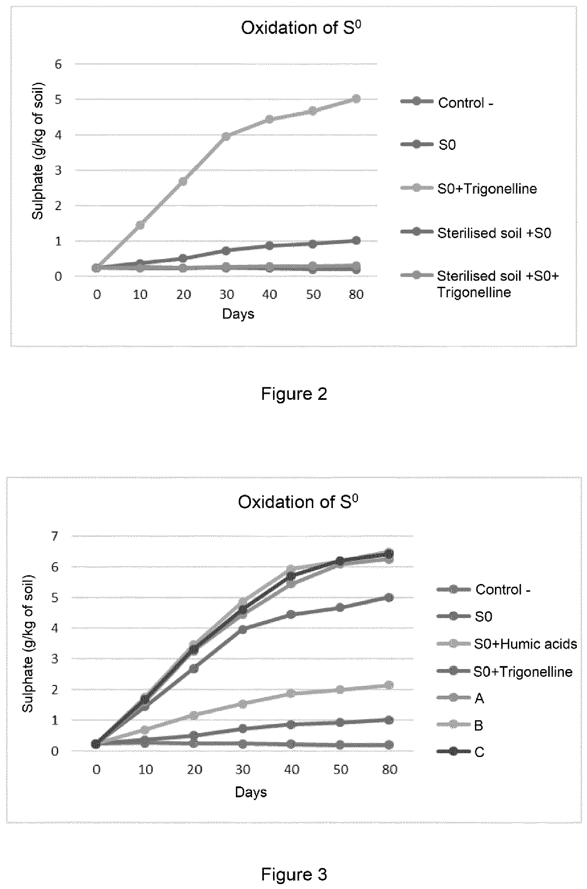

The results of this test are shown in Table 2 below and in Figure 2.

**Table 2**

| Days | 0 | 10 | 20 | 30 | 40 | 50 | 80 |
|---|---|---|---|---|---|---|---|
| Control - (ground) | 0.24 | 0.27 | 0.25 | 0.24 | 0.23 | 0.2 | 0.2 |
| Trigonelline | 0.24 | 0.24 | 0.26 | 0.28 | 0.27 | 0.29 | 0.26 |
| S⁰ | 0.24 | 0.37 | 0.51 | 0.73 | 0.87 | 0.93 | 1.02 |
| S⁰+trigonelline | 0.24 | 1.45 | 2.69 | 3.97 | 4.45 | 4.68 | 5.02 |
| Soilₛₜₑᵣ+ S⁰ | 0.24 | 0.23 | 0.23 | 0.27 | 0.25 | 0.28 | 0.26 |
| Soilster + S⁰+trigonelline | 0.24 | 0.25 | 0.24 | 0.28 | 0.29 | 0.3 | 0.31 |

The data obtained show that SO₄²⁻ generation in trigonelline-treated soil depends on the presence of S⁰ and is mediated by soil microorganisms.

### 3. Study of combinations of the invention

The effect of the combination of trigonelline with other organic molecules, wherein Test 1 showed an increase in S⁰ oxidation, was studied. For this purpose, three fertiliser compositions were prepared in powder form according to the invention with the following composition:
A: 97.5% S⁰ and 2.5% of the combination of between 30 and 80% by weight of trigonelline, between 5 and 30% of glutamic acid, between 5 and 30% of glucose and between 5 and 30% of gluconic acid.
B: 97.5% S⁰ and 2.5% of the combination of between 30 and 80% by weight of trigonelline, between 5 and 30% of leucine, between 5 and 30% of fructose and between 5 and 30% of citric acid.
C: 97.5% S⁰ and 2.5% of the combination of between 30 and 80% by weight of trigonelline, between 5 and 30% of isoleucine, between 5 and 30% of glycerol and between 5 and 30% of mannitol).

The results of this test are shown in Table 3 below and in Figure 3.

| Days | 0 | 10 | 20 | 30 | 40 | 50 | 80 |
|---|---|---|---|---|---|---|---|
| Control - | 0.24 | 0.27 | 0.25 | 0.24 | 0.23 | 0.2 | 0.2 |
| S⁰ | 0.24 | 0.37 | 0.51 | 0.73 | 0.87 | 0.93 | 1.02 |
| S⁰+humic acids | 0.24 | 0.69 | 1.17 | 1.54 | 1.88 | 2.01 | 2.15 |
| S⁰+trigonelline | 0.24 | 1.45 | 2.69 | 3.97 | 4.45 | 4.68 | 5.02 |
| A | 0,24 | 1.62 | 3.27 | 4.45 | 5.45 | 6.1 | 6.26 |
| B | 0.24 | 1.77 | 3.45 | 4.87 | 5.94 | 6.2 | 6.49 |
| C | 0.24 | 1.69 | 3.31 | 4.61 | 5.72 | 6.21 | 6.43 |

As can be seen from this test, all 3 combinations enhance the effect of S°+trigonelline application in a similar way, suggesting that the maximum microorganism-mediated S⁰ oxidation capacity is achieved with the same.

## Claims

1. A fertiliser composition including elemental sulphur (S°) and an enhancer of microbiological oxidation of S⁰ which is trigonelline.

2. The fertiliser composition according to claim 1, **characterised in that** it comprises between 85 and 99.5% by weight of S⁰ and between 0.5 and 15% of trigonelline.

3. The fertiliser composition according to claim 1, **characterised in that** it comprises between 85 and 99.5% by weight of S⁰ between 0.5 and 10% by weight of trigonelline and between 0.5 and 5% by weight of other components selected from the group consisting of sugars, amino acids, organic acids, polyamines, alcohols, nucleotides and combinations thereof, the fertiliser composition being in the form of powder.

4. The fertiliser composition according to claim 3, **characterised in that** the sugars are selected from mono- and di-saccharides, preferably sucrose, fructose, trehalose, glucose, arabinose, maltose, lactose, as well as mixtures thereof.

5. The fertiliser composition according to claim 3, **characterised in that** the amino acids are selected from threonine, lysine, phenylalanine, methionine, GABA, ornithine, glycine, asparagine, aspartic acid, glutamine, glutamic acid, serine, asparagine, tyrosine, tryptophan, valine, leucine, isoleucine, proline, 4-hydroxyproline, arginine, histidine, alanine, cysteine, and mixtures thereof.

6. The fertiliser composition according to claim 3, **characterised in that** the organic acids are selected from lactic acid, succinic acid, oxalic acid, gluconic acid, threonic acid, citric acid, fumaric acid and mixtures thereof.

7. The fertiliser composition according to claim 3, **characterised in that** the polyamines are selected from putrescine, spermidine, spermine and mixtures thereof.

8. The fertiliser composition according to claim 3, **characterised in that** the alcohols are selected from glycerol, sorbitol, mannitol, myoinositol, as well as mixtures thereof.

9. The fertiliser composition according to any of the preceding claims, **characterised in that** it is formulated in powder form.

10. The fertiliser composition according to any of claims 1 to 8, **characterised in that** it is formulated in the form of an emulsion in water.

11. The fertiliser composition according to any of claims 1 to 8, **characterised in that** it is formulated in granular form.

12. A combination of a fertilizer composition according to any of claims 1 to 11 and another additional fertilizer selected from nitrogen fertilizers, phosphate fertilizers, potassium fertilizers, calcium fertilizers and amendments, micronutrient fertilizers, boric acid, leonardite and feldspar, as well as combinations thereof, and/or in combination with one or more biostimulants selected from the group consisting of amino acid hydrolysates, humic extracts, algae extracts, live micro-organisms, extracts of micro-organisms and combinations thereof.

13. The combination according to claim 12, **characterised in that** the composition according to any of claims 1 to 11 is present in a proportion of 10 to 60% by weight.

14. The combination according to any of claims 12-13, **characterised in that** the additional nitrogen fertiliser is present in a proportion of 5 to 90% by weight and is selected from urea, potassium nitrate, ammonium nitrate, calcium nitrate, calcium ammonium nitrate, nitromagnesium.

15. The combination according to any of claims 12-13, **characterised in that** the additional phosphate fertiliser is present in a proportion of 5 to 90% by weight and is selected from phosphate rock, triple superphosphate, single superphosphate, concentrated superphosphate, phosphoric acid.

16. The combination according to any of claims 12-13, **characterised in that** the additional potassium fertiliser is present in a proportion of 5 to 90% by weight and is selected from potassium chloride and potassium hydroxide.

17. The combination according to any of claims 12-13, **characterised in that** the additional calcium fertiliser is present in a proportion of 5 to 90% by weight and is selected from calcium chloride, calcium cyanamide, dolomite, limestone, calcium oxide, calcium hydroxide.

18. The combination according to any of claims 12-13, **characterised in that** the additional micronutrient fertiliser is present in a proportion of 1 to 30% by weight and is selected from ammonium molybdate, cobalt chloride, micronutrients iron, magnesium, zinc, manganese and/or copper combined with the complexing agents humate, citrate, gluconate, heptagluconate and amino acids or with the chelating agents EDTA, EDDHA, DPTA.

19. The combination according to any of claims 12-13, **characterised in that** boric acid as an additional fertiliser is present in a proportion of 1 to 30% by weight.

20. The combination according to any of claims 12-13, **characterised in that** leonardite as an additional fertiliser is present in a proportion of 5 to 90% by weight.

21. The combination according to any of claims 12-13, **characterised in that** feldspar as an additional fertiliser is present in a proportion of 5 to 90% by weight.

22. The combination according to any of claims 12-13, **characterised in that** the live microorganisms or extracts of microorganisms are selected from the species *Pichia guilliermondii, Azotobacter chroococcum, Bacillus megaterium, Acidithiobacillus, Acidianus, Alicyclobacillus, Aquaspirillum, Bacillus, Beggiatoa, Mesorhizobium, Methylobacterium, Parococcus, Pseudomonas, Rhizobium, Starkeya, Thermithiobacillus, Thermothrix, Thiobacillus, Xanthobacter* and combinations thereof and are present in a proportion of 5 to 90% by weight.

23. A composition according to claim 9 for use in powder form **characterised in that** it is applied in an amount of 0.5 to 20 kg/ha.

24. The composition according to claim 10 for use in the form of an emulsion, **characterised in that** it is applied in an amount of 0.06 to 1 kg/ha.

25. A combination according to any of claims 12 to 22 for use thereof in granular form, **characterised in that** it is applied in an amount of 75 to 1,500 kg/ha directly.

## Patentansprüche

1. Düngemittelzusammensetzung, die elementaren Schwefel (S°) und einen Verstärker der mikrobiologischen Oxidation von S⁰, der Trigonellin ist, beinhaltet.

2. Düngemittelzusammensetzung nach Anspruch 1, **dadurch gekennzeichnet, dass** sie zwischen 85 und 99,5 Gew.-% S° und zwischen 0,5 und 15 % Trigonellin umfasst.

3. Düngemittelzusammensetzung nach Anspruch 1, **dadurch gekennzeichnet, dass** sie zwischen 85 und 99,5 Gew.-% S°, zwischen 0,5 und 10 Gew.-% Trigonellin und zwischen 0,5 und 5 Gew.-% andere Bestandteile, ausgewählt aus der Gruppe bestehend aus Zuckern, Aminosäuren, organischen Säuren, Polyaminen, Alkoholen, Nukleotiden und deren Kombinationen, umfasst, wobei die Düngemittelzusammensetzung in Form von Pulver vorliegt.

4. Düngemittelzusammensetzung nach Anspruch 3, **dadurch gekennzeichnet, dass** die Zucker aus Mono- und Di-Sacchariden, vorzugsweise Saccharose, Fructose, Trehalose, Glucose, Arabinose, Maltose, Lactose sowie deren Mischungen ausgewählt sind.

5. Düngemittelzusammensetzung nach Anspruch 3, **dadurch gekennzeichnet, dass** die Aminosäuren aus Threonin, Lysin, Phenylalanin, Methionin, GABA, Ornithin, Glycin, Asparagin, Asparaginsäure, Glutamin, Glutaminsäure, Serin, Asparagin, Tyrosin, Tryptophan, Valin, Leucin, Isoleucin, Prolin, 4-Hydroxyprolin, Arginin, Histidin, Alanin, Cystein und deren Mischungen ausgewählt sind.

6. Düngemittelzusammensetzung nach Anspruch 3, **dadurch gekennzeichnet, dass** die organischen Säuren aus Milchsäure, Bernsteinsäure, Oxalsäure, Gluconsäure, Threonsäure, Zitronensäure, Fumarsäure und deren Mischungen ausgewählt sind.

7. Düngemittelzusammensetzung nach Anspruch 3, **dadurch gekennzeichnet, dass** die Polyamine aus Putrescin, Spermidin, Spermin und deren Mischungen ausgewählt sind.

8. Düngemittelzusammensetzung nach Anspruch 3, **dadurch gekennzeichnet, dass** die Alkohole aus Glycerin, Sorbitol, Mannitol, Myoinositol sowie deren Mischungen ausgewählt sind.

9. Düngemittelzusammensetzung nach einem der vorhergehenden Ansprüche, **dadurch gekennzeichnet, dass** sie in Pulverform formuliert ist.

10. Düngemittelzusammensetzung nach einem der Ansprüche 1 bis 8, **dadurch gekennzeichnet, dass** sie in Form einer Emulsion in Wasser formuliert ist.

11. Düngemittelzusammensetzung nach einem der Ansprüche 1 bis 8, **dadurch gekennzeichnet, dass** sie in Granulatform formuliert ist.

12. Kombination aus einer Düngemittelzusammensetzung nach einem der Ansprüche 1 bis 11 und einem weiteren zusätzlichen Düngemittel, ausgewählt aus Stickstoffdüngern, Phosphatdüngern, Kaliumdüngern, Calciumdüngern und -zusätzen, Mikronährstoffdüngern, Borsäure, Leonardit und Feldspat sowie deren Kombinationen, und/oder in Kombination mit einem oder mehreren Biostimulanzien, ausgewählt aus der Gruppe bestehend aus Aminosäurehydrolysaten, Humusextrakten, Algenextrakten, lebenden Mikroorganismen, Extrakten von Mikroorganismen und deren Kombinationen.

13. Kombination nach Anspruch 12, **dadurch gekennzeichnet, dass** die Zusammensetzung nach einem der Ansprüche 1 bis 11 in einem Anteil von 10 bis 60 Gew.-% vorhanden ist.

14. Kombination nach einem der Ansprüche 12-13, **dadurch gekennzeichnet, dass** der zusätzliche Stickstoffdünger in einem Anteil von 5 bis 90 Gew.-% vorhanden ist und aus Harnstoff, Kaliumnitrat, Ammoniumnitrat, Calciumnitrat, Calciumammoniumnitrat, Nitromagnesium ausgewählt wird.

15. Kombination nach einem der Ansprüche 12-13, **dadurch gekennzeichnet, dass** der zusätzliche Phosphatdünger in einem Anteil von 5 bis 90 Gew.-% vorhanden ist und aus Phosphatgestein, Dreifachsuperphosphat, Einfachsuperphosphat, konzentriertem Superphosphat und Phosphorsäure ausgewählt ist.

16. Kombination nach einem der Ansprüche 12-13, **dadurch gekennzeichnet, dass** der zusätzliche Kaliumdünger in einem Anteil von 5 bis 90 Gew.-% vorhanden ist und aus Kaliumchlorid und Kaliumhydroxid ausgewählt wird.

17. Kombination nach einem der Ansprüche 12-13, **dadurch gekennzeichnet, dass** der zusätzliche Kalziumdünger in einem Anteil von 5 bis 90 Gew.-% vorhanden ist und aus Kalziumchlorid, Kalziumcyanamid, Dolomit, Kalkstein, Kalziumoxid und Kalziumhydroxid ausgewählt ist.

18. Kombination nach einem der Ansprüche 12-13, **dadurch gekennzeichnet, dass** der zusätzliche Mikronährstoffdünger in einem Anteil von 1 bis 30 Gew.-% vorhanden ist und aus Ammoniummolybdat, Kobaltchlorid, den Mikronährstoffen Eisen, Magnesium, Zink, Mangan und/oder Kupfer in Kombination mit den Komplexbildnern Humat, Citrat, Gluconat, Heptagluconat und Aminosäuren oder mit den Chelatisierungsmitteln EDTA, EDDHA, DPTA ausgewählt ist.

19. Kombination nach einem der Ansprüche 12-13, **dadurch gekennzeichnet, dass** Borsäure als zusätzlicher Dünger in einem Anteil von 1 bis 30 Gew.-% vorhanden ist.

20. Kombination nach einem der Ansprüche 12-13, **dadurch gekennzeichnet, dass** Leonardit als zusätzlicher Dünger in einem Anteil von 5 bis 90 Gew.-% vorhanden ist.

21. Kombination nach einem der Ansprüche 12-13, **dadurch gekennzeichnet, dass** Feldspat als zusätzlicher Dünger in einem Anteil von 5 bis 90 Gew.-% vorhanden ist.

22. Kombination nach einem der Ansprüche 12-13, **dadurch gekennzeichnet, dass** die lebenden Mikroorganismen oder Extrakte von Mikroorganismen aus den Arten *Pichia guilliermondii, Azotobacter chroococcum, Bacillus megaterium, Acidithiobacillus, Acidianus, Alicyclobacillus, Aquaspirillum, Bacillus, Beggiatoa, Mesorhizobium, Methylobacterium, Parococcus, Pseudomonas, Rhizobium, Starkeya, Thermithiobacillus, Thermothrix, Thiobacillus, Xanthobacter* und deren Kombinationen ausgewählt sind und in einem Anteil von 5 bis 90 Gew.-% vorhanden sind.

23. Zusammensetzung nach Anspruch 9 zur Verwendung in Pulverform, **dadurch gekennzeichnet, dass** sie in einer Menge von 0,5 bis 20 kg/ha ausgebracht wird.

24. Zusammensetzung nach Anspruch 10 zur Verwendung in Form einer Emulsion, **dadurch gekennzeichnet, dass** es in einer Menge von 0,06 bis 1 kg/ha ausgebracht wird.

25. Kombination nach einem der Ansprüche 12 bis 22 zur Verwendung in Granulatform, **dadurch gekennzeichnet, dass** es in einer Menge von 75 bis 1.500 kg/ha direkt ausgebracht wird.

## Revendications

1. Composition d'engrais renfermant du soufre élémentaire (S⁰) et un activateur de l'oxydation microbiologique de S⁰ qui est la trigonelline.

2. Composition d'engrais selon la revendication 1, **caractérisée en ce qu'**elle comprend entre 85 et 99,5 % en poids de S⁰ et entre 0,5 et 15 % de trigonelline.

3. Composition d'engrais selon la revendication 1, **caractérisée en ce qu'**elle comprend entre 85 et 99,5 % en poids de S⁰, entre 0,5 et 10 % en poids de trigonelline et entre 0,5 et 5 % en poids d'autres composants choisis dans le groupe constitué par les sucres, les acides aminés, les acides organiques, les polyamines, les alcools, les nucléotides et les combinaisons de ceux-ci, la composition d'engrais étant sous la forme de poudre.

4. Composition d'engrais selon la revendication 3, **caractérisée en ce que** les sucres sont choisis parmi des monosaccharides et des disaccharides, de préférence le saccharose, le fructose, le tréhalose, le glucose, l'arabinose, le maltose, le lactose, ainsi que des mélanges de ceux-ci.

5. Composition d'engrais selon la revendication 3, **caractérisée en ce que** les acides aminés sont choisis parmi la thréonine, la lysine, la phénylalanine, la méthionine, le GABA, l'ornithine, la glycine, l'asparagine, l'acide aspartique, la glutamine, l'acide glutamique, la sérine, l'asparagine, la tyrosine, le tryptophane, la valine, la leucine, l'isoleucine, la proline, la 4-hydroxyproline, l'arginine, l'histidine, l'alanine, la cystéine et des mélanges de ceux-ci.

6. Composition d'engrais selon la revendication 3, **caractérisée en ce que** les acides organiques sont choisis parmi l'acide lactique, l'acide succinique, l'acide oxalique, l'acide gluconique, l'acide thréonique, l'acide citrique, l'acide fumarique et des mélanges de ceux-ci.

7. Composition d'engrais selon la revendication 3, **caractérisée en ce que** les polyamines sont choisies parmi la putrescine, la spermidine, la spermine et des mélanges de celles-ci.

8. Composition d'engrais selon la revendication 3, **caractérisée en ce que** les alcools sont choisis parmi le glycérol, le sorbitol, le mannitol, le myo-inositol, ainsi que des mélanges de ceux-ci.

9. Composition d'engrais selon l'une quelconque des revendications précédentes, **caractérisée en ce qu'**elle est formulée sous forme de poudre.

10. Composition d'engrais selon l'une quelconque des revendications 1 à 8, **caractérisée en ce qu'**elle est formulée sous la forme d'une émulsion dans de l'eau.

11. Composition d'engrais selon l'une quelconque des revendications 1 à 8, **caractérisée en ce qu'**elle est formulée sous forme granulaire.

12. Combinaison d'une composition d'engrais selon l'une quelconque des revendications 1 à 11 et d'un autre engrais supplémentaire choisi parmi des engrais azotés, des engrais phosphatés, des engrais potassiques, des engrais et amendements calciques, des engrais à base de micronutriments, l'acide borique, la léonardite et le feldspath, ainsi que des combinaisons de ceux-ci, et/ou en combinaison avec un ou plusieurs biostimulants choisis dans le groupe constitué par les hydrolysats d'acides aminés, les extraits humiques, les extraits d'algues, les micro-organismes vivants, les extraits de micro-organismes et les combinaisons de ceux-ci.

13. Combinaison selon la revendication 12, **caractérisée en ce que** la composition selon l'une quelconque des revendications 1 à 11 est présente en une proportion de 10 à 60 % en poids.

14. Combinaison selon l'une quelconque des revendications 12 à 13, **caractérisée en ce que** l'engrais azoté supplémentaire est présent en une proportion de 5 à 90 % en poids et est choisi parmi l'urée, le nitrate de potassium, le nitrate d'ammonium, le nitrate de calcium, le nitrate d'ammonium et de calcium, le nitromagnésium.

15. Combinaison selon l'une quelconque des revendications 12 à 13, **caractérisée en ce que** l'engrais phosphaté supplémentaire est présent en une proportion de 5 à 90 % en poids et est choisi parmi la roche phosphatée, le superphosphate triple, le superphosphate simple, le superphosphate concentré, l'acide phosphorique.

16. Combinaison selon l'une quelconque des revendications 12 à 13, **caractérisée en ce que** l'engrais potassique supplémentaire est présent en une proportion de 5 à 90 % en poids et est choisi parmi le chlorure de potassium et l'hydroxyde de potassium.

17. Combinaison selon l'une quelconque des revendications 12 à 13, **caractérisée en ce que** l'engrais calcique supplémentaire est présent en une proportion de 5 à 90 % en poids et est choisi parmi le chlorure de calcium, le cyanamide calcique, la dolomie, le calcaire, l'oxyde de calcium, l'hydroxyde de calcium.

18. Combinaison selon l'une quelconque des revendications 12 à 13, **caractérisée en ce que** l'engrais à base de micronutriments supplémentaire est présent en une proportion de 1 à 30 % en poids et est choisi parmi le molybdate d'ammonium, le chlorure de cobalt, les micronutriments fer, magnésium, zinc, manganèse et/ou cuivre combinés avec les agents complexants humate, citrate, gluconate, heptagluconate et acides aminés ou avec les agents chélateurs EDTA, EDDHA, DPTA.

19. Combinaison selon l'une quelconque des revendications 12 à 13, **caractérisée en ce que** l'acide borique en tant qu'engrais supplémentaire est présent en une proportion de 1 à 30 % en poids.

20. Combinaison selon l'une quelconque des revendications 12 à 13, **caractérisée en ce que** la léonardite en tant qu'engrais supplémentaire est présente en une proportion de 5 à 90 % en poids.

21. Combinaison selon l'une quelconque des revendications 12 à 13, **caractérisée en ce que** le feldspath en tant qu'engrais supplémentaire est présent en une proportion de 5 à 90 % en poids.

22. Combinaison selon l'une quelconque des revendications 12 à 13, **caractérisée en ce que** les micro-organismes vivants ou extraits de micro-organismes sont choisis parmi les espèces *Pichia guilliermondii, Azotobacter chroococcum, Bacillus megaterium, Acidithiobacillus, Acidianus, Alicyclobacillus, Aquaspirillum, Bacillus, Beggiatoa, Mesorhizobium, Methylobacterium, Parococcus, Pseudomonas, Rhizobium, Starkeya, Thermithiobacillus, Thermothrix, Thiobacillus, Xanthobacter* et des combinaisons de ceux-ci et sont présents en une proportion de 5 à 90 % en poids.

23. Composition selon la revendication 9 destinée à être utilisée sous forme de poudre **caractérisée en ce qu'**elle est appliquée en une quantité de 0,5 à 20 kg/ha.

24. Composition selon la revendication 10 destinée à être utilisée sous la forme d'une émulsion, **caractérisée en ce qu'**elle est appliquée en une quantité de 0,06 à 1 kg/ha.

25. Combinaison selon l'une quelconque des revendications 12 à 22 destinée à être utilisée sous forme granulaire, **caractérisée en ce qu'**elle est appliquée en une quantité de 75 à 1 500 kg/ha directement.
